# FASCICULE DE BREVET EUROPEEN

(11) **EP 3 547 202 B1**
(45) Date de publication et mention de la délivrance du brevet: **20.10.2021**
(21) Numéro de dépôt: 19164910.2
(22) Date de dépôt: 25.03.2019
(51) Int. Cl.: G06F 21/62, G06F 21/33

(54) **MÉTHODE D'ACCÈS À DES DONNÉES ANONYMISÉES**
ZUGRIFFSMETHODE AUF ANONYMISIERTE DATEN
METHOD FOR ACCESS TO ANONYMISED DATA

(30) Priorité: 26.03.2018 FR 1852591
(43) Date de publication de la demande: 02.10.2019
(73) Titulaire: Commissariat à l'énergie atomique et aux énergies alternatives, 75015 Paris (FR)
(72) Inventeur: HENNEBERT, Christine, 38054 Grenoble Cedex 9 (FR)
(74) Mandataire: Brevalex

(56) Documents cités:
- WO-A1-2018/019364
- US-A1- 2011 010 563
- US-A1- 2018 060 496
- GUY ZYSKIND ET AL: "Decentralizing Privacy: Using Blockchain to Protect Personal Data", THE INSTITUTE OF ELECTRICAL AND ELECTRONICS ENGINEERS, INC. (IEEE) CONFERENCE PROCEEDINGS, 1 mai 2015 (2015-05-01), page 180, XP055360065, Piscataway DOI: 10.1109/SPW.2015.27

## Description

### DOMAINE TECHNIQUE

La présente invention concerne de manière générale une méthode d'accès à des données personnelles, telles que celles issues d'objets connectés. Elle concerne également le domaine des chaines de blocs (*blockchains*) et plus particulièrement celles qui permettent d'exécuter des contrats intelligents (*smart contracts*).

### ÉTAT DE LA TECHNIQUE ANTÉRIEURE

Le Règlement Général de la Protection des Données (RGPD) 2016/679 doit entrer en vigueur en Mai 2018. Celui-ci requiert notamment (art. 25) que des mesures techniques soient prises dès la conception d'un système d'information pour garantir la protection des données personnelles et la restriction de leur accès selon la finalité spécifique de chaque traitement.

En particulier, il est nécessaire de protéger l'accès à des données qui pourraient révéler le comportement ou les habitudes de vie d'un utilisateur donné. Ainsi, par exemple, les données collectées par un réseau de capteurs destinés à mesurer la consommation électrique et/ou la consommation en eau d'un usager d'un système IoT (*Internet of Things*) pourraient trahir ses horaires de présence à son domicile et le rendre sensiblement plus vulnérable aux intrusions.

Deux méthodes peuvent être utilisées pour protéger les données personnelles et respecter la vie privée des utilisateurs (*privacy*) :
- l'anonymisation des données, c'est-à-dire le fait de stocker et, le cas échéant, de traiter les données personnelles sans possibilité d'identifier directement ou indirectement la personne à qui appartiennent ces données ;
- la confidentialité des données, réalisée par chiffrement des données personnelles au moyen d'une clé de chiffrement.

La protection des données personnelles peut être ainsi obtenue soit en dissimulant l'identité des propriétaires des données soit en dissimulant les données qui leur appartiennent, soit encore en combinant les deux techniques en question.

L'anonymisation a essentiellement été utilisée pour le transport des données. Ainsi, par exemple, le fait de masquer ou de substituer les informations situées dans les entêtes des messages (les « *metadata* ») servant au routage des trames dans un réseau VPN, rend impossible la détermination de l'identité de l'émetteur et du destinataire de ces trames.

La confidentialité par chiffrement des données est la méthode la plus répandue dans le domaine des systèmes IoT. Les données issues des capteurs sont alors chiffrées au moyen d'un algorithme de cryptographie symétrique, les clés symétriques étant préalablement distribuées au moyen d'une infrastructure de clés asymétriques. L'utilisateur disposant des droits d'accès peut accéder aux données personnelles ainsi chiffrées et les déchiffrer avec la clé symétrique correspondante.

L'article de G. Zyskind et al. intitulé « Decentralizing privacy : using blockchain to protect personal data », publié dans Security and Privacy Workshop (SPW), pp. 180-184, mai 2015, propose de décentraliser la protection des données personnelles à l'aide d'une chaine de blocs (blockchain). La gestion des accès fait appel d'une part à une transaction de contrôle d'accès stockant l'identité de l'utilisateur et de ses autorisations d'accès dans la chaine de blocs et, d'autre part, à une transaction de données stockant les données chiffrées de manière distribuée dans les nœuds du réseau au moyen d'une table de hachage distribuée (DHT). Cette solution, bien que ne requérant plus de tiers de confiance centralisé, repose sur une confidentialité des données par chiffrement.

L'objet de la présente invention est de proposer une méthode et un système d'accès à des données personnelles qui permettent de protéger ces données par simple anonymisation et ne nécessitent pas de recourir à un tiers de confiance. L'objet de la présente invention concerne également une méthode de stockage de données personnelles de manière anonymisée.

### EXPOSÉ DE L'INVENTION

La présente invention est définie par une méthode de stockage anonymisé de données personnelles, lesdites données personnelles appartenant à un propriétaire de données et étant fournies par un dispositif générateur de données, lesdites données personnelles étant destinées à être stockées dans une première base de données hébergée par un serveur de données, le dispositif générateur de données étant connecté au serveur de données au moyen d'un premier canal sécurisé, le dispositif générateur de données et le serveur de données, étant interfacés à une chaine de blocs, ladite méthode comprenant les étapes suivantes :
- le générateur de données génère des empreintes desdites données au moyen d'une fonction de hachage et enregistre lesdites empreintes dans la chaine de blocs en appelant un premier contrat intelligent (#Print) déployé dans cette chaine, lesdites empreintes étant enregistrées dans la chaine de blocs en relation avec des paramètres d'accès ;
- le générateur de données transmet lesdites empreintes et données associées au serveur de données via le premier canal sécurisé ;
- le serveur de données consulte la chaine de blocs pour y lire des empreintes enregistrées, une donnée étant stockée dans la première base de données à une adresse indexée par son empreinte si cette empreinte est enregistrée dans la chaine de blocs, et n'étant pas stockée dans la première base de données si cette n'empreinte n'est pas enregistrée dans la chaine de blocs.

Selon une variante, les données sont stockées en clair dans la première base de données.

Dans un mode de réalisation, le dispositif générateur de données est un dispositif de frontière d'un réseau de capteurs, le dispositif de frontière collectant des données brutes issues de ces capteurs via une passerelle.

Lesdites données sont avantageusement collectées sous forme de trames, chaque trame associée à un capteur comportant une entête contenant l'identifiant du capteur et une charge utile contenant des données brutes du capteur, l'empreinte des données brutes étant stockée dans la chaine de blocs en relation avec ledit identifiant du capteur.

Avantageusement, les étapes suivantes sont prévues :
(a) un serveur de jetons d'accès génère des jetons d'accès pour différents utilisateurs, un jeton d'accès d'un utilisateur représentant les droits d'accès de cet utilisateur aux données personnelles pour un usage prédéterminé, le jeton d'accès dudit utilisateur étant identifié par un identifiant de jeton et transmis, au moyen d'une deuxième transaction, à un deuxième contrat intelligent (#Subscribe) stocké dans la chaine de blocs, le deuxième contrat intelligent enregistrant le jeton d'accès dans la chaine de blocs;
(b) un terminal dudit utilisateur transmet, au moyen d'une troisième transaction une demande d'autorisation d'accès identifiée par un identifiant de demande d'autorisation, à un troisième contrat intelligent (#Authorize) stocké dans la chaine de blocs, le troisième contrat intelligent interrogeant le premier contrat intelligent et obtenant le jeton d'accès en lui fournissant des éléments cryptographiques permettant d'authentifier l'utilisateur, puis déterminant si des conditions d'accès contenues dans le jeton sont bien remplies et, dans l'affirmative, enregistrant l'autorisation d'accès dans la chaine de blocs ;
(c) le terminal dudit utilisateur transmet une requête d'accès au serveur de données, la requête d'accès comprenant ledit identifiant de demande d'autorisation d'accès, le serveur de données interrogeant le troisième contrat intelligent en lui fournissant ledit identifiant de demande d'autorisation d'accès, le troisième contrat intelligent retournant au serveur de données le jeton correspondant à cette demande si une autorisation d'accès correspondant à l'identifiant de la demande d'autorisation est bien enregistrée dans la chaine de blocs ;
(d) le serveur de données lit dans la chaine de blocs les empreintes correspondant aux paramètres d'accès spécifiés dans le jeton d'accès obtenu à l'étape (c), lit les données personnelles stockées dans la première base de données aux adresses indexées par les empreintes ainsi lues, et transmet les données personnelles ainsi lues au terminal dudit utilisateur.

Lesdits paramètres d'accès comprennent typiquement l'identifiant d'un capteur.

Les éléments cryptographiques comprennent typiquement une clé publique de l'utilisateur ainsi qu'une adresse de portefeuille obtenue par hachage de ladite clé publique.

Selon une variante avantageuse de réalisation, préalablement à l'étape (b) l'identifiant de jeton est transmis au terminal de l'utilisateur.

En outre, à l'étape (b) la demande d'autorisation d'accès peut être enregistrée dans la chaine de blocs.

Enfin, le jeton d'accès comprend de préférence un premier champ contenant l'identifiant de jeton, un deuxième champ contenant un identifiant de l'utilisateur, un troisième champ optionnel contenant un identifiant du propriétaire des données personnelles, un quatrième champ optionnel contenant l'adresse du premier contrat, et un cinquième champ contenant les paramètres d'accès.

### BRÈVE DESCRIPTION DES DESSINS

D'autres caractéristiques et avantages de l'invention apparaîtront à la lecture d'un mode de réalisation préférentiel de l'invention, en référence aux figures jointes parmi lesquelles :
La Fig. 1 représente de manière schématique un système d'information sans tiers de confiance centralisé, auquel est susceptible de s'appliquer la méthode d'anonymisation de données personnelles selon l'invention ;
La Fig. 2 représente de manière schématique une méthode d'anonymisation de données personnelles pour un système d'information sans tiers de confiance centralisé, selon un mode de réalisation de l'invention ;
La Fig. 3 représente de manière schématique les principales étapes d'une méthode d'accès à des données personnelles anonymisées par la méthode de la Fig. 1;
La Fig. 4 représente de manière schématique l'architecture d'un premier système d'information implémentant la méthode d'anonymisation de données personnelles selon la Fig. 2 et la méthode d'accès à ces données selon la Fig. 3 ;
La Fig. 5 représente de manière schématique les messages et transactions échangés dans le système de la Fig. 4 ;
La Fig. 6 représente de manière schématique l'architecture d'un second système d'information implémentant la méthode d'anonymisation de données personnelles selon la Fig. 1 et la méthode d'accès à ces données selon la Fig. 2 ;
Les Fig. 7A et 7B représentent de manière schématique les messages et transactions échangés dans le système d'information de la Fig. 6.

### EXPOSÉ DÉTAILLÉ DE MODES DE RÉALISATION PARTICULIERS

Une première idée à la base de l'invention est d'enregistrer les données personnelles dans une base de données de manière anonymisée, à des adresses indexées par leurs empreintes associées.

Par données personnelles, on entend toute information se rapportant à une personne physique identifiée ou identifiable, directement ou indirectement. Ces données personnelles peuvent notamment provenir de dispositifs connectés (capteurs d'un réseau IoT) situés dans l'environnement de la personne physique (domicile par exemple). Pour garantir la vie privée des personnes physiques et notamment des utilisateurs d'un réseau IoT, il est nécessaire de protéger l'accès à ces données personnelles. En d'autres termes, il ne doit pas être possible à un tiers de pouvoir avoir accès à ces données personnelles sans avoir préalablement obtenu l'autorisation de la personne physique correspondante. Cette personne physique sera désignée dans la suite comme le propriétaire des données personnelles.

Une seconde idée à la base de la présente invention est d'utiliser un système d'information sans serveur de sécurité central. Le rôle traditionnel du serveur de sécurité est ici dévolu à des contrats intelligents exécutés à partir d'une chaine de blocs (*blockchain*)/*un* registre distribué (*ledger*) sécurisé par un protocole de confiance automatisé.

On rappelle qu'une chaine de blocs se compose de blocs chainés par un mécanisme cryptographique à intervalles de temps réguliers. Le chainage est obtenu en insérant une valeur hachée (*hash*) du bloc précédent, obtenue par une fonction de hachage (telle que SHA-256 par exemple), dans le contenu du bloc courant. La chaine de blocs forme un registre qui est distribué et répliqué à tous les nœuds du réseau. Ceux-ci peuvent interagir avec la chaine de blocs et utiliser son contenu. L'intégrité des informations incluses dans les blocs de la chaine est garantie par des fonctions cryptographiques.

On considérera dans la suite une chaine de blocs capable de stocker non seulement des transactions (comme dans Bitcoin) mais aussi d'exécuter le code de contrats intelligents (*smart contracts*)*.* Un exemple d'une telle chaine de blocs est Ethereum. Un contrat intelligent est un code logiciel pouvant être stocké dans un bloc du registre distribué. Ce code logiciel est adressable par une adresse déterminée et peut comprendre plusieurs fonctions. L'exécution d'une fonction du contrat intelligent ou du contrat lui-même peut être déclenchée par l'envoi d'une transaction émise depuis une adresse de portefeuille (encore dénommée adresse de compte dans Ethereum) vers l'adresse du code en question, la transaction comprenant l'identification de la fonction à exécuter et les arguments attendus en entrée.

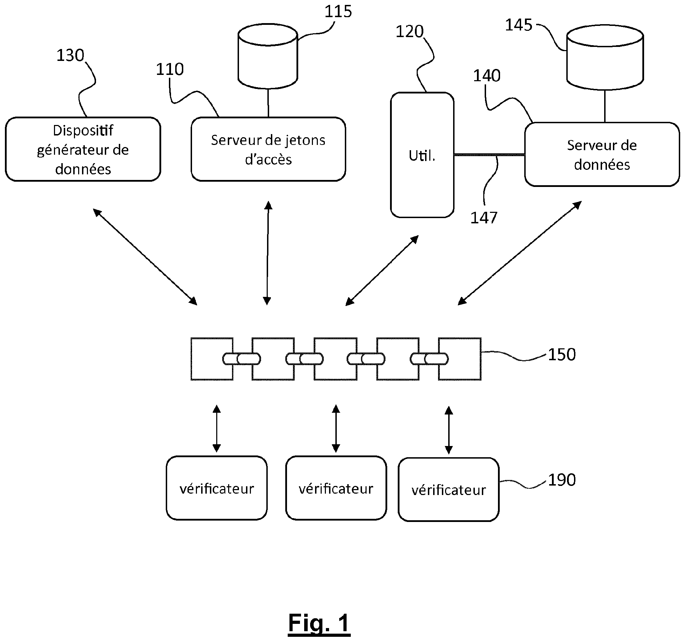

La Fig. 1 représente de manière schématique un système d'information sans tiers de confiance centralisé, auquel est susceptible de s'appliquer la méthode d'anonymisation de données personnelles selon l'invention.

Les données personnelles sont générées par un dispositif générateur de données 130, par exemple un dispositif de frontière (*edge device*) d'un réseau IoT collectant des données de capteurs ou bien un terminal susceptible de fournir des données saisies au moyen d'une interface de type GUI. Les données sont structurées sous forme de trames (ou de fichiers). Le générateur de données 130 est également adapté à calculer des empreintes de ces trames (ou de ces fichiers) au moyen d'une fonction de hachage.

On a représenté en 120 le terminal (par exemple un smartphone, une tablette ou un ordinateur) d'un utilisateur souhaitant accéder à des données personnelles. Cet utilisateur peut être une personne physique ou bien un automate sous la forme d'un logiciel hébergé dans le terminal en question. Ces données personnelles peuvent être celles de l'utilisateur même ou, plus souvent, celles d'un tiers qui en a autorisé l'accès. Comme nous le verrons plus loin, les données personnelles sont stockées de manière anonymisée dans une première base de données 145 hébergée par le serveur de données 140. Le terminal de l'utilisateur 120 peut communiquer avec le serveur de données 140 au moyen d'une liaison sécurisée 147.

Le système d'information comprend en outre un dispositif générateur de droits d'accès, 110, se présentant sous la forme d'un serveur de jetons d'accès connecté à une seconde base de données 115 dans laquelle sont stockés les profils d'accès des différents utilisateurs. Le dispositif générateur des droits d'accès est chargé de la génération de jetons d'accès aux utilisateurs disposant d'un profil d'accès dans la seconde base de données. Chaque jeton d'accès généré pour un utilisateur contient les droits d'accès de cet utilisateur, en conformité avec le profil d'accès correspondant. Le dispositif générateur de droits d'accès est chargé en outre de la mise à jour des profils d'accès des différents utilisateurs, en particulier de leur création, de leur modification ou de leur suppression.

Le cas échéant, le système peut également faire intervenir le propriétaire des données personnelles, de manière à ce qu'il puisse exprimer son consentement (ou son refus de consentement), lorsque le profil d'accès d'un utilisateur requiert de recueillir le consentement du propriétaire des données.

Une fois le jeton d'accès généré et, le cas échéant, le consentement du propriétaire des données obtenu, l'utilisateur peut se voir octroyer une autorisation d'accès aux données personnelles. L'utilisateur pourra ensuite se prévaloir de cette autorisation auprès du serveur de données pour accéder effectivement aux données personnelles en question.

Les différents éléments du système, à savoir le serveur de jetons d'accès, 110, le terminal de l'utilisateur, 120, le dispositif de générateur de données, 130 et le serveur de données, 140, possèdent une interface leur permettant d'interagir avec la chaine de blocs 150. Chaque élément possède au moins un portefeuille, identifié par une adresse de portefeuille. Cette adresse de portefeuille est généralement obtenue par hachage de la clé publique d'un couple de clé publique/clé privée appartenant à cet élément. Le couple de clé publique/clé privée est issu d'un système de cryptographie asymétrique, tel qu'un système de cryptographie sur courbes elliptiques.

Comme nous le verrons plus loin, les opérations effectuées par les différents éléments du système font appel à des contrats intelligents (voire à un seul contrat intelligent regroupant l'ensemble de leurs fonctions respectives). Ces contrats intelligents sont stockés dans le registre distribué de la chaine de blocs.

La chaine de blocs permet de garantir la bonne exécution de fonctions de sécurité et notamment l'authentification des différents éléments du système. Elle permet en outre de contrôler la génération d'empreintes de données, l'attribution de droits d'accès à des utilisateurs et la délivrance d'autorisation d'accès en leur faveur.

La vérification de la bonne exécution de ces contrats intelligents est confiée à des nœuds vérificateurs 190 du réseau qui valident le résultat de leur exécution selon un mécanisme de consensus, par exemple au moyen d'une preuve de travail (*proof of work*)*,* d'une preuve d'enjeu (*proof of stake*), d'une preuve d'autorité (*proof of authority*) voire de tout autre type de preuve assurant la confiance entre les éléments distribués du réseau si la chaine de blocs est privée.

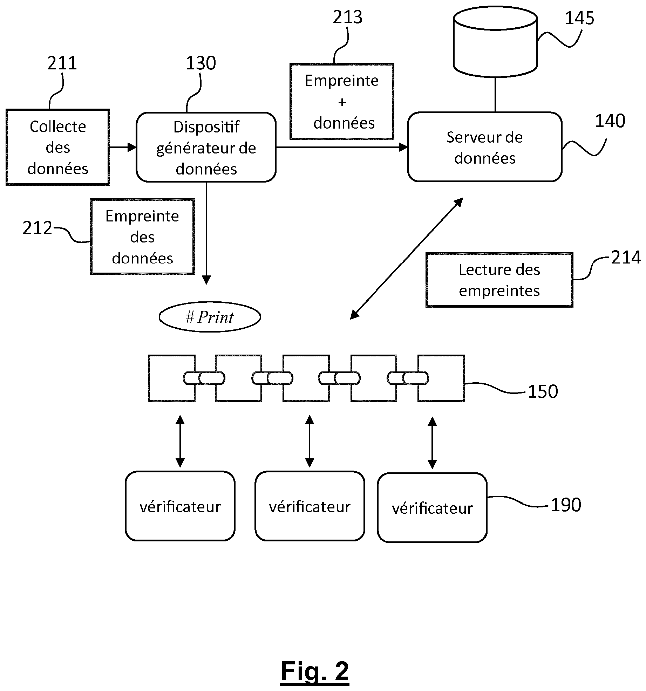

La Fig. 2 représente de manière schématique une méthode d'anonymisation de données personnelles pour un système d'information sans tiers de confiance centralisé, selon un mode de réalisation de l'invention.

Pour des raisons de simplification, seuls certains éléments du système d'information ont été représentés. La méthode d'anonymisation des données comporte plusieurs étapes détaillées ci-après.

Dans une première étape 211, les données personnelles sont collectées et les empreintes de ces données sont calculées par le dispositif générateur de données 130. Une empreinte de données est obtenue, par hachage de la charge utile de la trame, après élimination de l'entête. En effet, l'entête d'une trame contient généralement des informations permettant de remonter à l'identité du propriétaire des données, tel qu'un identifiant de la source des données. Le hachage est réalisé par une fonction de hachage appartenant par exemple à la famille SHA-2 ou SHA-3 avec une taille d'empreinte pouvant aller typiquement de 256 à 1024 bits. L'empreinte ainsi calculée représente un condensat des données brutes contenues dans la charge utile de la trame en question.

Dans une seconde étape 212, les empreintes de données sont enregistrées dans la chaine de blocs, 150. L'enregistrement est effectué à l'aide d'un premier contrat intelligent (#Print), après que celui-ci a authentifié le générateur de données. L'exécution de ce contrat est lancée par une transaction envoyée depuis le portefeuille du dispositif générateur de données.

Cette première transaction a pour arguments l'identifiant du dispositif générateur de données (l'adresse de portefeuille du dispositif de frontière), l'empreinte (de la trame de données ou du fichier de données) à enregistrer, les paramètres de l'accès et, le cas échéant, la localisation par exemple sous la forme d'une URL, de la ressource où sont stockées les données (cet argument pourra être omis lorsque le système ne comprend qu'une seule première base de données). Les paramètres de l'accès peuvent par exemple contenir l'identifiant du capteur dont sont issues les données.

Le cas échéant, la première transaction comprend le règlement d'un prix en cryptomonnaie à une adresse de portefeuille d'un tiers, par exemple de l'entreprise ayant déployé les capteurs ou bien celle d'un administrateur.

Dans une troisième étape, 213, les trames de données collectées ainsi que leurs empreintes respectives sont transmises, via un canal sécurisé, au serveur de données, pour être stockées dans la première base de données, à la localisation indiquée (URL par exemple).

Avant de stocker une trame de données, le serveur de données consulte en 214 le registre distribué pour vérifier si l'empreinte correspondante est bien présente dans la chaine de blocs. Si cette empreinte n'est pas présente, la trame de données correspondante n'est pas stockée. Si en revanche elle est effectivement présente, la trame de données est stockée dans la première base de données à une adresse indexée par son empreinte. On comprend par conséquent que les données sont enregistrées de manière anonymisée dans la première base de données.

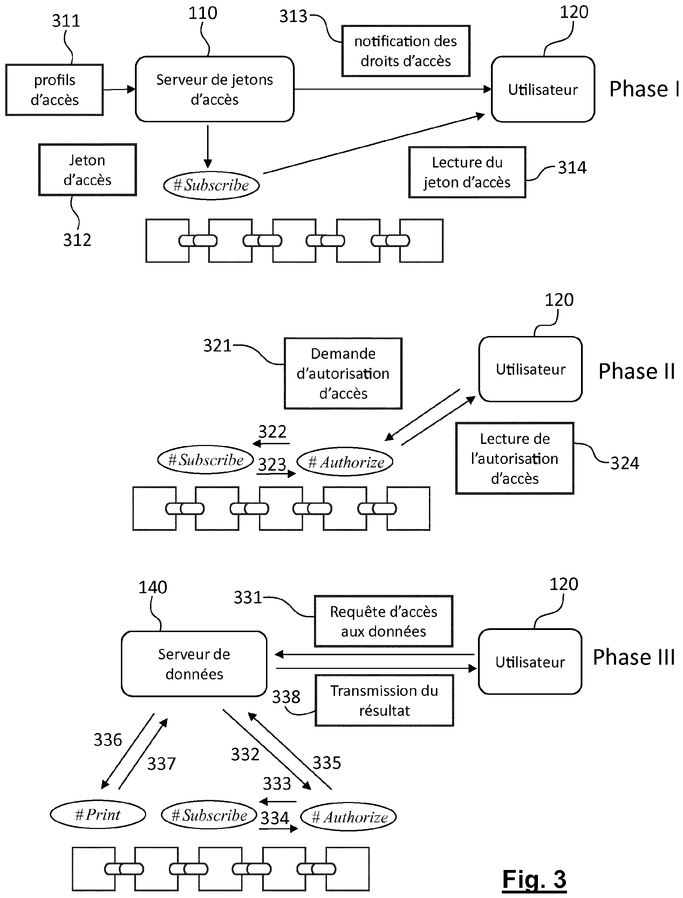

La Fig. 3 représente de manière schématique les principales étapes d'une méthode d'accès à des données personnelles, préalablement anonymisées au moyen de la méthode de la Fig. 2.

Cette méthode d'accès comporte essentiellement trois phases. Seuls certains éléments du système d'information ont été représentés dans les différentes phases.

La première phase (phase I) concerne la génération des droits d'accès des différents utilisateurs et leur enregistrement dans la chaine de blocs.

Le serveur dejetons d'accès 110 génère des jetons (*tokens*) représentant les droits d'accès des différents utilisateurs aux données personnelles. Un jeton est relatif à un utilisateur pour un usage prédéterminé. Il est défini par un ensemble structuré de données comprenant plusieurs champs et doit être conforme au profil d'accès spécifié dans la première base de données.

La structure d'un jeton d'accès est détaillée ci-après.

Un premier champ contient un identifiant de jeton (par exemple un numéro tiré aléatoirement), *TokUID.*

Un deuxième champ contient l'identifiant de l'utilisateur (ou de l'automate, voire de l'objet connecté), propriétaire du jeton. Cet identifiant est en règle générale l'adresse de portefeuille de l'utilisateur. Toutefois, lorsque différents utilisateurs sont susceptibles d'avoir la même adresse de portefeuille (cas d'Ethereum où l'adresse de portefeuille ne comprend que 180 bits de l'empreinte (*hash* de 256 bits obtenu par SHA-256) de la clé publique obtenue), ce second champ pourra également comprendre la clé publique de l'utilisateur.

Un troisième champ contient l'identifiant du propriétaire des données personnelles. Ce troisième champ est facultatif et pourra être omis lorsque le propriétaire des données personnelles peut se déduire de manière univoque de l'identifiant de l'utilisateur. Comme précédemment, en cas de possible collision entre adresses de portefeuille, le troisième champ pourra également comprendre la clé publique du propriétaire des données.

Un quatrième champ comprend l'adresse du contrat #Print (voire aussi du contrat #Authorize dont il sera question plus loin). Ce champ est optionnel dans la mesure où le serveur de données pourra recevoir ces adresses hors chaine de blocs.

Un cinquième champ comprend les paramètres d'accès : un identifiant de la source de données, un identifiant de la règle d'accès et du cas d'usage autorisé sous cette règle d'accès. Cet ensemble de paramètres caractérise l'accès autorisé.

Un sixième champ, facultatif, donne la date d'expiration du jeton. Le cas échéant, ce champ pourra également indiquer si le jeton a été révoqué (variable booléenne).

Un septième champ, facultatif, indique si le propriétaire des données a donné son consentement pour l'usage auquel le jeton est destiné (variable booléenne).

Un huitième champ, facultatif, indique si le montant éventuel associé à l'utilisation du jeton a bien été réglé.

L'ordre des différents champs peut bien entendu différer d'une implémentation à l'autre. D'autres champs pourront également être envisagés par l'homme du métier sans sortir pour autant du cadre de la présente invention.

Le serveur de jetons d'accès dispose d'une adresse de portefeuille (encore dénommée adresse de compte dans Ethereum) @ *walletTokserver* à partir de laquelle il peut émettre des transactions vers la chaine de blocs. Cette adresse de portefeuille est obtenue par hachage de sa clé publique au moyen d'une fonction de hachage (telle que SHA-256 par exemple).

A l'étape 311, le serveur de jetons d'accès reçoit les profils d'accès des utilisateurs pour les différents usages envisagés.

A l'étape 312, le serveur de jetons d'accès transmet une seconde transaction à destination d'un second contrat intelligent (#*Subscribe*), stocké dans la chaine de blocs à une adresse de compte prédéterminée. Cette transaction a pour argument un jeton d'accès au format précité pour le cas d'usage en question.

Le serveur de droits d'accès fait appel à une fonction particulière du contrat #*Subscribe* qui contient un script de verrouillage ( *scriptLockPodicy*#*n* où *n* indexe le cas d'usage) associé au cas d'usage considéré. Ce script de verrouillage enregistre le jeton dans le registre distribué de la chaine de blocs.

Le cas échéant, la seconde transaction comprend le règlement d'un prix en cryptomonnaie au propriétaire des données personnelles.

En outre, le propriétaire des données personnelles peut être amené à fournir son consentement à la consultation des données personnelles, soit hors chaine de blocs (par exemple au moyen d'un contrat de mandat signé par les parties), soit par l'intermédiaire de la chaine de blocs. Le consentement accordé à un utilisateur est généralement lié à un profil d'accès particulier. Lorsque le consentement doit être recueilli par l'intermédiaire de la chaine de blocs, ce consentement est inscrit dans la chaine de blocs au moyen d'un contrat intelligent #*Consent* (non représenté).

Le serveur de jetons d'accès 110 notifie ensuite en 313 (notification hors chaine de blocs) à l'utilisateur qu'un jeton en sa faveur a été créé et stocké dans la chaine de blocs et lui communique l'identifiant du jeton ainsi créé, *TokUID* .

L'utilisateur est alors en mesure de consulter le registre distribué de la chaine de blocs en 314 pour y lire, à partir de son adresse de portefeuille ( @ *walletUser* ), le jeton ainsi stocké.

La bonne exécution des contrats intelligents *#Subscribe* et #*Consent* , l'enregistrement du jeton et, le cas échéant, du consentement du propriétaire des données personnelles, sont vérifiés et validés par les nœuds vérificateurs 190, sur la base du mécanisme de consensus précité.

La seconde phase (Phase II) concerne l'émission par l'utilisateur d'une demande d'autorisation accès aux données personnelles et l'autorisation qui lui est octroyée en retour, le cas échéant.

L'utilisateur souhaitant obtenir une autorisation d'accès aux données personnelles du propriétaire émet, dans une première étape 321, une transaction (dénommée ci-après troisième transaction), à partir de l'adresse de portefeuille @ *walletUser* et à destination d'un troisième contrat intelligent ( # *Authorize* ) stocké dans la chaine de blocs. Cette transaction est identifiée par un identifiant de demande d'autorisation d'accès sous la forme d'un numéro d'ordre, *IdReq*#*p* , généré par l'utilisateur.

La troisième transaction a pour argument la clé publique de l'utilisateur ( *PublicKey* ), l'identifiant de la requête d'autorisation accès ( *IdReq*#*p* ), et une signature numérique de la transaction ( *SigNum* ) au moyen de la clé privée de l'utilisateur. Par signature numérique, on entend un élément cryptographique permettant de vérifier que l'auteur de la transaction est bien celui identifié par la clé publique. A titre d'exemple, lorsque la chaine de blocs est Ethereum, la signature numérique peut être fournie par la fonction *sign* de la librairie « util » d'Ethereum.

La troisième transaction fait appel à une fonction particulière du contrat intelligent *#Authorize,* jouant le rôle de script de déverrouillage ( *scriptUnlockPolicy*#*n* où *n* indexe le cas d'usage) correspondant au script de verrouillage du contrat, #*Subscribe .*

Le script de déverrouillage appelle en 322 le premier contrat intelligent, #*Subscribe,* en lui fournissant en argument l'identifiant du jeton, *TokUID* . A l'aide de cet identifiant, le contrat intelligent #*Subscribe* retrouve le jeton et le transmet en 323 au contrat intelligent *#Authorize* . Le script de déverrouillage utilise les éléments cryptographiques fournis par l'utilisateur, à savoir l'adresse publique de l'utilisateur, *PublicKey* , ainsi que la signature numérique de la transaction, *SigNum* , pour déverrouiller le jeton. Si les éléments cryptographiques correspondent bien à ceux indiqués dans le script de verrouillage, le jeton est déverrouillé et, s'il est encore valide, une autorisation d'accès ( *AuthZ* ) est stockée dans la chaine de blocs avec l'identifiant de la requête d'autorisation d'accès ( *IdReq*#*p* ). Cette autorisation d'accès contient l'identifiant du jeton pour laquelle elle a été octroyée.

En revanche, si les éléments cryptographiques ne correspondent pas à ceux attendus ou si le jeton est périmé, aucune autorisation d'accès n'est stockée dans le registre distribué de la chaine de blocs.

Le cas échéant, la troisième transaction comportera le versement d'un montant en cryptomonnaie pour rémunérer le service d'accès et/ou le propriétaire des données personnelles. Le règlement du prix pourra constituer une condition à remplir pour l'obtention de l'autorisation. Le règlement pourra être réalisé par l'utilisateur au moyen de la troisième transaction.

L'autorisation d'accès comprend le cas échéant les paramètres de validité de cette autorisation : durée de validité, nombre maximal de consultations, etc.

L'utilisateur est alors en mesure de consulter le registre distribué et lire l'autorisation accordée et à quelles conditions, en 324.

Là encore, la bonne exécution des contrats intelligents #*Authorize* et #*Subscribe* , le déverrouillage du jeton, les conditions de l'usage, le paiement du prix requis, l'enregistrement de l'autorisation d'accès sont vérifiés et validés par les nœuds vérificateurs, 190, sur la base du mécanisme de consensus précité.

La troisième phase (Phase III) concerne l'accès proprement dit aux données personnelles.

L'utilisateur transmet en 331, au moyen de son terminal 120, une requête d'accès aux données personnelles, à destination du serveur de données, 110, via le canal sécurisé, 147. Cette requête comprend l'identifiant de la requête d'autorisation d'accès, *IdReq*#*p* .

Le serveur de données interroge alors le deuxième contrat intelligent #*Authorize* en lui fournissant l'identifiant de requête d'autorisation d'accès, *IdReq*#*p* en 332. Le contrat #*Authorize* vérifie qu'une autorisation d'accès correspondant au numéro a bien été octroyée à l'utilisateur et, dans l'affirmative, interroge en 333 le premier contrat intelligent #*Subscribe* et obtient en 334 le jeton correspondant (c'est-à-dire le jeton dont l'identifiant *TokUID* figure dans l'autorisation d'accès). Le contrat #*Authorize* retourne, en 335, le jeton en question au serveur de données.

Le serveur de données extrait du jeton les paramètres d'accès et notamment l'identifiant de la source de données. Il interroge en 336 le contrat #*Print* et récupère en retour en 337 les empreintes des données issues de cette source ainsi que l'URL où ces données sont stockées.

A l'URL ainsi obtenue, le serveur de données lit les données personnelles qui y sont stockées aux adresses indexées par les empreintes.

Les données dans la base de données peuvent être stockées sous forme chiffrée ou en clair. Lorsqu'elles sont chiffrées, les clés de chiffrement peuvent être stockées dans un coffre-fort numérique (« *secure element* »). Le serveur d'accès peut accéder au coffre-fort et lire la clé de chiffrement appropriée pour déchiffrer les données à l'adresse spécifiée par l'empreinte.

Le cas échéant, si plusieurs empreintes sont spécifiées, les données personnelles lues peuvent être agrégées par le serveur de données, préalablement à leur transmission. De manière générale, le serveur peut effectuer un traitement sur les données ainsi lues avant de les transmettre à l'utilisateur.

A l'étape 338, le serveur de données transmet à l'utilisateur, via le canal sécurisé, les données personnelles extraites, après les avoir agrégées si nécessaire.

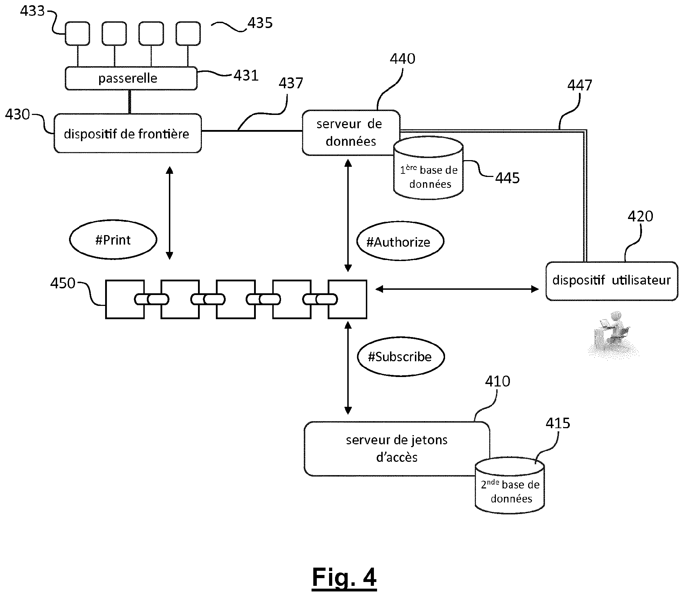

La Fig. 4 représente de manière schématique l'architecture d'un premier système d'information implémentant la méthode d'anonymisation de données personnelles selon la Fig. 1 et la méthode d'accès à ces données selon la Fig. 3

Dans ce système d'information, les données personnelles sont fournies par des objets connectés. A titre illustratif, les objets connectés considérés ici peuvent être des capteurs de consommation d'électricité ou d'eau dans des appartements, des capteurs de géolocalisation, etc.

Les objets connectés, 433, sont connectés à un dispositif de frontière (*edge device*)*,* 430, via une passerelle (*gateway*)*,* 431.

Des objets peuvent former un réseau local, 435, selon différentes topologies (étoile ou maillée par exemple) en communiquant via un protocole sans fil (WiFi, Bluetooth, BLE, ZigBee, 6LoWPAN, LoRaWAN, SigFox, X3D, EnOcean...) ou un protocole filaire (Ethernet ou KNX par exemple). Ces objets peuvent embarquer des capteurs. Ils peuvent aussi être contraints en ressources, distants et autonomes.

La passerelle 431 a pour fonction d'assurer l'interface entre le réseau d'objets connectés et le dispositif de frontière 430.

Le dispositif de frontière, 430, joue ici le rôle d'un générateur de données. Il transmet des données générées via un premier canal sécurisé (typiquement par un protocole SSH ou SSL/TLS), 437, au serveur de données 440. Le dispositif de frontière 430 est équipé d'une interface *blockchain* (BKC) permettant de transmettre des empreintes de données à la chaine de blocs pour y être enregistrées à l'aide du contrat intelligent « #Print ».

Le cas échéant, le dispositif de frontière 430 peut être intégré dans la passerelle 431.

Le serveur de données 440 héberge la première base de données 445 dans laquelle sont stockées les données personnelles de manière anonymisée. Chaque trame de données ou ensemble de données est stocké(e) dans une ressource pointée par une URL, à une adresse indexée par son empreinte. Le serveur de données est également équipé d'une interface avec la chaine de blocs lui permettant de consulter le registre distribué et notamment de lire les autorisations d'accès des utilisateurs.

Le terminal d'utilisateur, 420 (en pratique une application client hébergée dans ce terminal, un smartphone par exemple), voire un automate, peut se connecter au serveur de données 440 via un canal sécurisé 447, pour lui transmettre des demandes d'autorisation d'accès comme expliqué en phase II de la Fig.3.

Il peut lire ses jetons d'accès via le contrat intelligent « #Subscribe » et transmettre une demande d'autorisation d'accès au contrat intelligent « #Authorize ».

Le serveur de jetons d'accès, 410, héberge les fiches « profils » des utilisateurs et des sources de données, 410. Les droits d'accès sont octroyés par le serveur de jetons d'accès, 415, le cas échéant après avoir recueilli le consentement des propriétaires des données. Il convient de noter que les propriétaires des données peuvent être également des utilisateurs au sens précédent.

Le serveur de jetons d'accès peut communiquer avec la chaine de blocs et enregistrer les jetons d'accès représentant les droits d'accès en faisant appel à la fonction d'enregistrement du contrat intelligent « #Subscribe ».

De manière classique, des blocs de la chaine de blocs sont validés au moyen d'un protocole de consensus distribué et minés par des nœuds de minage sur la base d'une preuve de travail (*proof of work*) voire d'une preuve d'autorité pour les chaines de blocs privées. La validation des blocs permet de garantir la légitimité, l'intégrité et l'immuabilité des informations enregistrées dans le registre distribué.

Chaque nœud du réseau possédant une copie de la chaine de blocs (*full node*) peut exécuter les contrats intelligents. La vérification de la bonne exécution d'un contrat intelligent incombe aux mineurs ou à un ensemble de nœuds vérificateurs (par exemple au moyen du protocole TrueBit décrit dans l'article de J. Teutsch et C. Reitwießner intitulé « A scalable verification solution for blockchains »), la décision de bonne exécution étant prise par consensus.

Avantageusement, l'exécution des contrats intelligents nécessitera la dépense d'un montant en crypto-monnaie (somme en gas sur Ethereum), autrement dit les transactions faisant appel à ces contrats pourront prévoir un paiement en crypto-monnaie, ce qui permettra de dissuader les attaques par déni de service.

De même, la vérification de la bonne exécution des contrats pourra être rémunérée en crypto-monnaie.

Le registre distribué stockant la chaine de blocs permet de gérer les identifiants des différents acteurs du système (le dispositif générateur de données, le serveur de données, le serveur de jetons d'accès, les utilisateurs) et d'assurer le lien entre eux sans violation de confidentialité. Il fait notamment le lien entre les données personnelles stockées de manière anonyme dans la première base de données, les jetons d'accès générés selon les fiches de profil des utilisateurs, et les autorisations d'accès délivrées. Elle garantit ainsi par construction (*privacy by design*) la protection des données personnelles.

La chaine de blocs permet d'assurer la traçabilité des données anonymisées (stockage des empreintes), des droits d'accès des utilisateurs, des autorisations qui leur sont délivrées et assure la sécurité de l'ensemble de manière distribuée entre tous les nœuds du réseau.

L'autorisation d'un accès aux données au bénéfice d'un utilisateur est le résultat d'un consensus de vérification. Chaque nœud mineur ou vérificateur du réseau peut en effet exécuter le contrat intelligent « #Subscribe » avec les éléments d'une demande d'accès enregistrée par un utilisateur dans la chaine de blocs et vérifier si l'autorisation émise est bien valide.

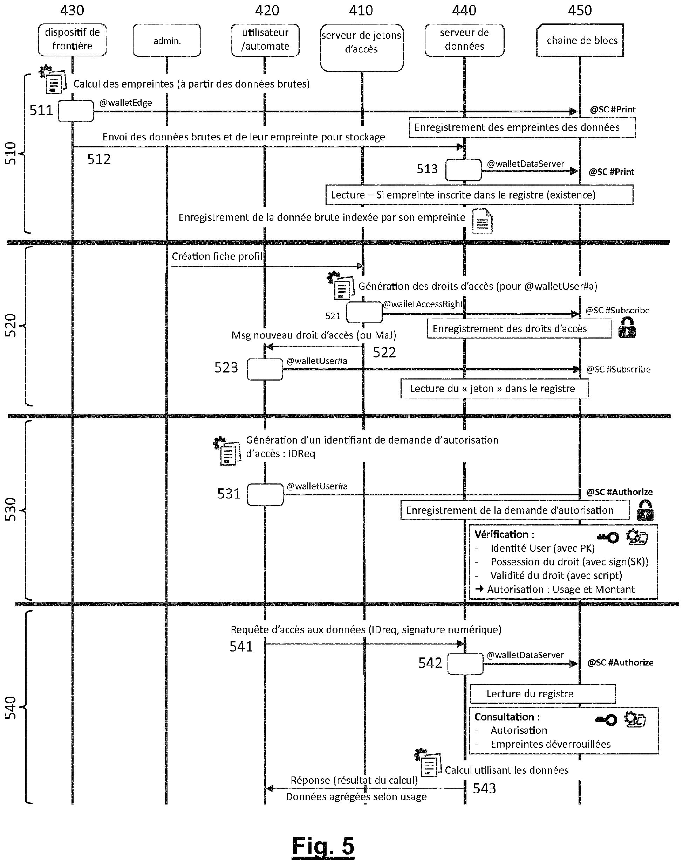

La Fig. 5 représente de manière schématique les messages et transactions échangés dans le système d'information de la Fig. 4.

On a attribué des colonnes aux différents acteurs du système de la Fig. 5, à savoir le générateur de données (dispositif de frontière), 430, l'utilisateur (ou l'automate), 420, le serveur de jetons d'accès, 410, le serveur de données, 440, et la chaine de blocs, 450, support des différents contrats intelligents.

La phase de collecte et d'enregistrement des données est représentée en 510. Cette phase met en œuvre la méthode d'anonymisation des données telle que décrite en relation avec la Fig. 2.

Le dispositif de frontière extrait les données des charges utiles des trames et calcule au moyen d'une fonction de hachage l'empreinte de ces données. Pour enregistrer une empreinte de données dans la chaine de blocs, le dispositif de frontière forme une transaction ayant pour arguments l'empreinte des données à enregistrer ainsi que l'adresse de la ressource où elles sont stockées (URL de la base de données ou de la ressource par exemple) et envoie la transaction signée numériquement à l'aide de sa clé privée depuis son adresse de portefeuille, @*walletEdge.*

La transaction signée est transmise en 511 au contrat intelligent « #Print » portant l'adresse @*SC* #*Print* dans la chaine de blocs. Le contrat intelligent authentifie l'émetteur de données (à l'aide de sa clé publique) en vérifiant que l'adresse de portefeuille @*walletEdge* fait bien partie d'une liste de dispositifs de frontière légitime (liste blanche). Dans l'affirmative, l'empreinte est enregistrée dans la chaine de blocs en association avec la localisation de la ressource.

En parallèle, le dispositif de frontière transmet en 512 les données brutes et leur empreinte correspondante au serveur de données pour stockage dans la première base de données à l'adresse de la ressource. Le serveur de données met alors la requête de stockage en attente et consulte le registre distribué depuis son adresse de portefeuille, @*walletDataServer* pour y vérifier la présence de l'empreinte des données qu'il vient de recevoir. Si l'enregistrement de l'empreinte dans la chaine de blocs est confirmé, c'est-à-dire que l'empreinte est bien contenue dans un bloc miné, accroché à la chaine, le serveur de données 440 procède à l'écriture des données brutes dans la première base de données, à une adresse indexée par l'empreinte des données en question. Plus précisément, les données associées à une empreinte sont stockées, au sein de la ressource, à une adresse qui est fournie de manière univoque par l'empreinte. Ceci permet de retrouver ultérieurement les données brutes et, le cas échéant, de vérifier leur intégrité.

La phase de collecte et d'enregistrement des données est suivie des phases I, II et III de la méthode d'accès.

La phase 520 correspond à la phase I de la Fig. 3, c'est-à-dire à la génération des droits d'accès (représentés par les jetons d'accès) des différents utilisateurs et leur enregistrement dans la chaine de blocs.

Les droits d'accès s'appuient sur des règles d'accès (« policy ») indiquant quel utilisateur peut accéder à quelles données dans quelles conditions (contexte) pour quelle action (finalité, traitement des données) et de façon optionnelle pour quel montant (prix à régler aux différents acteurs et en particulier au propriétaire). La génération des droits d'accès s'appuie aussi sur des fiches « profils » pré-enregistrées dans la seconde base de données par un administrateur. La seconde base de données contient les fiches de « profil » pour les utilisateurs, mentionnant en particulier leur rôle dans le système, ainsi que les fiches de « profil » pour des dispositifs autorisés à générer des données pour le système d'information.

Le serveur de jetons d'accès peut générer directement des droits d'accès à des utilisateurs (par exemple si ces utilisateurs sont propriétaires des données auxquelles ils souhaitent accéder ou parce que leur consentement est implicite ou découle d'une obligation légale) ou bien requérir le consentement explicite du propriétaire des données en question. Dans le second cas, le consentement pourra par exemple être recueilli sous forme électronique par un échange entre le dispositif administrateur et le propriétaire des données via un canal sécurisé. Alternativement, le consentement peut être enregistré en regard du « jeton » dans le registre de la chaine de blocs.

Le serveur de jetons d'accès génère au profit d'un utilisateur (ici l'utilisateur #a) ou d'un automate un jeton d'accès selon le profil correspondant stocké dans la seconde base de données. Il forme une transaction ayant comme argument le jeton d'accès et la signe numériquement avec sa clé privée avant de l'envoyer en 521, depuis son adresse de portefeuille, @*walletAccessRight,* à l'adresse @*SC* #*Subscribe* du contrat « #Subscribe », plus précisément à l'adresse du script de verrouillage qu'il contient. Ce contrat enregistre le jeton d'accès dans la chaine de blocs.

Par ailleurs, le serveur de jetons d'accès signifie en 522 à l'utilisateur, par un message ou une notification, que de nouveaux droits d'accès viennent de lui être attribués.

L'utilisateur est alors en mesure de lire, en 523, depuis son adresse de portefeuille, @*walletUser* #*a ,* le jeton enregistré dans le registre distribué de la chaine de blocs.

La phase 530 correspond à la phase II de la méthode d'accès de la Fig. 3. On suppose ici que la phase préliminaire de collecte et la première phase de génération des droits d'accès ont été préalablement effectuées.

En 531, un utilisateur peut se prévaloir des droits d'accès (matérialisés par un jeton d'accès) dont il dispose pour demander et, le cas échéant, obtenir une autorisation d'accès à des données personnelles.

Cette demande d'autorisation d'accès se voit attribuer par l'utilisateur un identifiant *IDreq.*

L'utilisateur #*a* demande une autorisation d'accès à l'aide d'une transaction comportant des éléments permettant de vérifier son identité et son jeton d'accès. Cette transaction est émise en 531 depuis l'adresse de portefeuille de l'utilisateur, @*walletUser* a#, et comprend au moins comme arguments l'identifiant de la requête, *IDreq* et l'identifiant du jeton, *TokUID* . Après avoir signé cette transaction au moyen de sa clé privée, l'utilisateur l'envoie à la fonction correspondant au script de déverrouillage du contrat intelligent « #Authorize » enregistré dans la chaine de blocs à l'adresse @*SC*#*Authorize.*

Lorsque le contrat intelligent « #Authorize » est exécuté par un nœud (mineur ou vérificateur), l'utilisateur est identifié au moyen de son adresse de portefeuille, le script de déverrouillage vérifie, à l'aide de la clé publique de l'utilisateur, que le jeton appartient bien à l'utilisateur et que le jeton d'accès est bien valide (par exemple si celui-ci est périmé ou non). Si la vérification est positive, le script de déverrouillage fournit une autorisation spécifiant pour quel usage elle est accordée. A défaut, l'autorisation est refusée.

Lorsque l'autorisation est accordée, le numéro de la requête d'accès, *IDreq,* est enregistré(e) dans la chaine de blocs par les nœuds vérificateurs (ou mineurs). En revanche, si l'autorisation est refusée, aucun enregistrement n'a lieu et le registre de la chaine de blocs contenant les états reste inchangé.

Ainsi, l'autorisation en question peut être aisément vérifiée par tous les acteurs interagissant avec la chaine de blocs. En outre, si un coût est associé à l'octroi de cette autorisation, une transaction représentant un transfert de montant en crypto-monnaie peut être émise (par exemple à l'adresse de portefeuille du propriétaire des données personnelles et/ou à celle du dispositif administrateur des droits d'accès).

La phase 540 correspond à la phase III de la méthode d'accès de la Fig. 3.

Cette phase comprend l'accès proprement dit aux données personnelles, le traitement éventuel de ces données par le serveur de données et la transmission du résultat à l'utilisateur ayant requis l'accès.

L'utilisateur transmet en 541 au serveur de données, via le second canal sécurisé (donc hors chaine de blocs), une requête d'accès ayant pour argument l'identifiant de l'autorisation précédemment obtenue, *IDreq.* Cette requête est signée numériquement à l'aide de la clé privée du portefeuille de l'utilisateur.

Le serveur de données consulte alors en 542 la chaine de blocs depuis son adresse de portefeuille, @*walletDataServer,* afin d'y lire la présence (existence) de l'autorisation portant le numéro *IDreq.*

Le serveur de données vérifie que l'autorisation d'accès a bien été octroyée à l'utilisateur #a pour la requête *IDreq* et récupère le jeton d'accès correspondant à cette autorisation.

Il extrait du jeton l'identifiant de la source de données et interroge le contrat #*Print* pour récupérer l'URL de la ressource et les empreintes de données.

Le serveur de données lit ensuite les données personnelles stockées aux adresses indexées par les empreintes de données, dans la ressource pointée par l'URL.

Le cas échéant, le serveur effectue un traitement sur les données ainsi lues (par exemple une agrégation de données), le traitement étant défini par l'usage figurant dans l'autorisation précédemment lue dans la chaine de blocs. Le résultat du traitement est ensuite transmis en 543 à l'utilisateur via le second canal sécurisé.

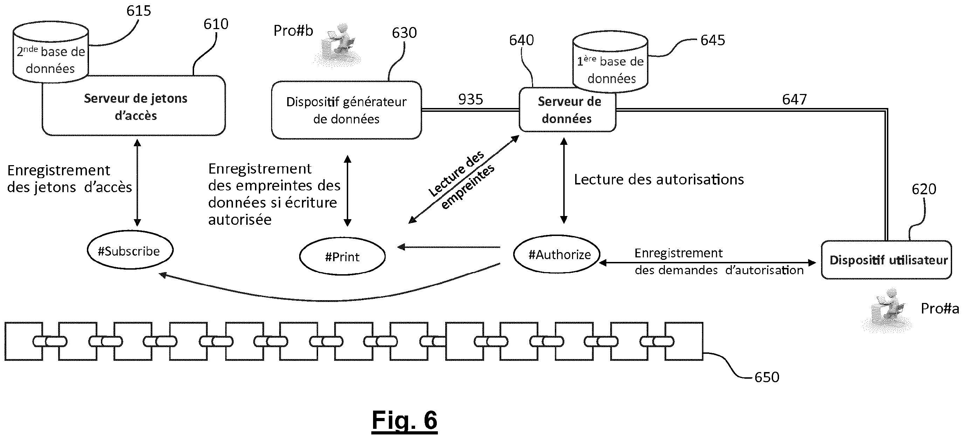

La Fig. 6 représente de manière schématique l'architecture d'un système de gestion d'accès à des données personnelles selon un second mode de réalisation de l'invention.

Sans perte de généralité, le second mode de réalisation sera illustré dans un cas d'usage de la gestion d'accès à des données médicales (dossier patient) par des professionnels de santé (épidémiologistes par exemple).

Dans ce mode de réalisation les données ne sont pas issues d'objets connectés et collectées par un dispositif de frontière mais générées par un dispositif générateur de données, 630, tel que le terminal d'un professionnel de santé *Pro b*# (médecin traitant, laboratoire d'analyses médicales, etc.).

Le système d'information comprend un serveur de données 640 hébergeant une première base de données 645 dans laquelle sont stockées les données médicales en clair, chaque trame de données (ou fichier de données) étant stockée à une adresse indexée par son empreinte.

Le terminal du praticien, 630, est relié au serveur de données, 640, au moyen d'un premier canal sécurisé, 635. De même, un dispositif utilisateur, 620, par exemple le terminal d'un professionnel de santé souhaitant accéder à des données médicales, est relié au serveur de données 640 au moyen d'un second canal sécurisé, 647.

Chacun des acteurs du système, à savoir le dispositif utilisateur, le générateur de données, le serveur de données, comprend une interface BKC lui permettant d'interagir avec la chaine de blocs 650 depuis une adresse de portefeuille.

Comme dans le premier mode de réalisation, les interactions de ces acteurs avec la chaine de blocs font appel aux contrats intelligents « #Print », « #Subscribe » et « #Authorize » décrits plus haut.

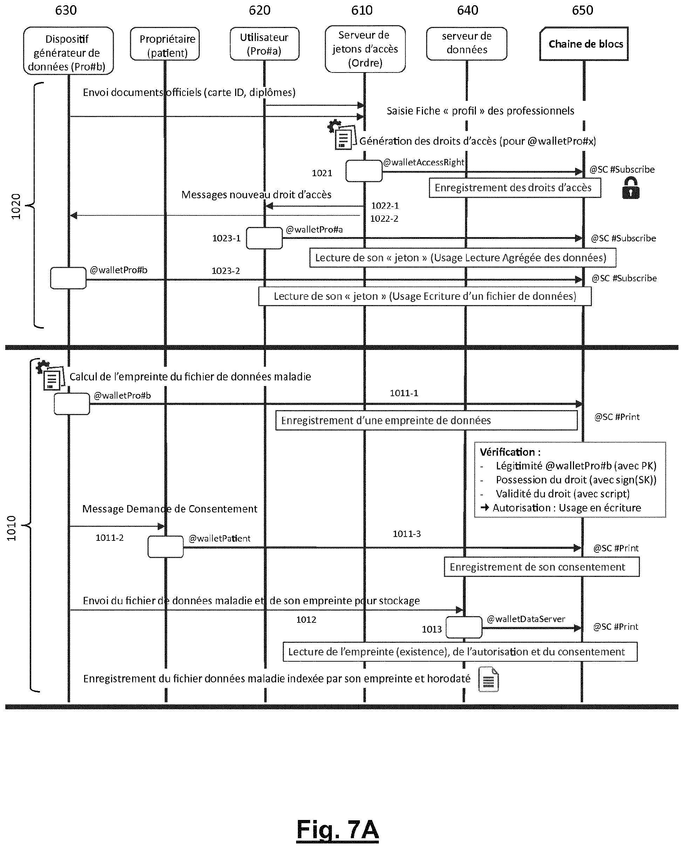

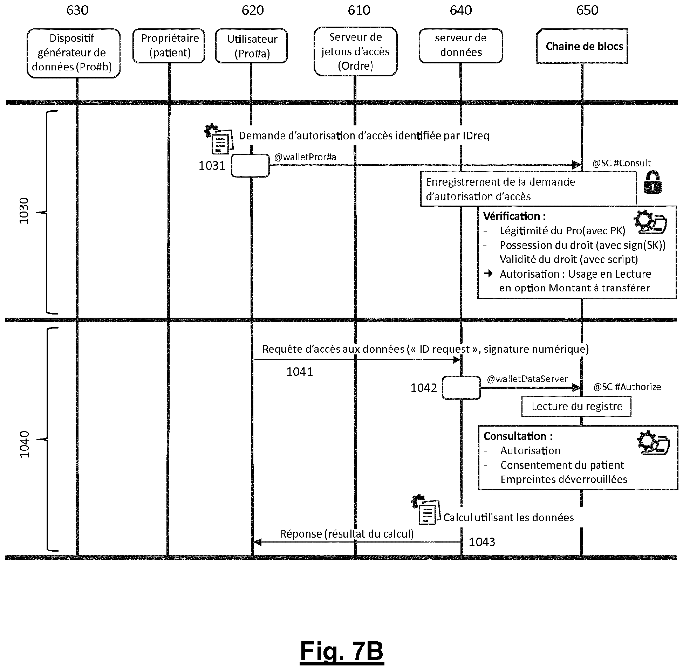

Les Fig. 7A et 7B représentent de manière schématique les messages et transactions échangés dans le système d'information de la Fig. 6.

On a représenté selon des colonnes les différents acteurs du système d'information: le générateur de données (par ex. terminal de *Pro b*# , tel que celui du médecin traitant), 630, le terminal du propriétaire des données médicales (patient), le dispositif utilisateur (par ex. terminal de *Pro a*# ), 620, le générateur des droits d'accès (par exemple terminal du Conseil de l'Ordre), 610, le serveur de données, 640, et la chaine de blocs, 650, support de l'exécution des contrats intelligents (« #Print », « #Subscribe » et « #Authorize »).

Dans ce second système d'information, la phase d'enregistrement des droits d'accès, 1020, précède la phase d'enregistrement anonymisé des données, 1010. Ceci est nécessaire ici dans la mesure où le générateur d'accès *(Pro b*#*)* doit avoir préalablement obtenu un profil d'accès en écriture pour que les données personnelles puissent être enregistrées dans la première base de données.

Dans la phase 1020, le générateur de données Pro b# et l'utilisateur Pro a# transmettent à l'administrateur les éléments permettant de les identifier et de vérifier l'authenticité de leurs qualifications (diplôme, carte professionnelle, etc.). Ces éléments sont saisis sous forme de fiches électroniques, par exemple.

Une fois ces éléments vérifiés, le serveur de jetons d'accès génère pour le générateur de données Pro b# et l'utilisateur, Pro a#, des jetons d'accès (respectivement en écriture et en lecture) à partir des profils stockés dans la seconde base de données. Pour chacun d'entre eux, il forme une transaction émise depuis l'adresse de portefeuille du dispositif générateur de droits d'accès, @walletAccessRight, comportant le jeton d'accès, puis signe cette transaction avec sa clé privée avant de la transmettre en 1021 à l'adresse de la fonction d'enregistrement @SC #Subscribe du contrat « #Subscribe ».

Ce contrat enregistre les jetons d'accès dans la chaine de blocs. L'administrateur de droits d'accès notifie alors (en 1022-1 et 1022-2) au générateur de données Pro b# et au professionnel de santé, Pro a#, qu'ils viennent de se voir octroyer de nouveaux droits d'accès. Ils récupèrent leurs jetons d'accès respectifs en 1023-1 et 1023-2 en consultant le registre à l'adresse du contrat intelligent « #Subscribe ».

Dans la phase de collecte et d'enregistrement 1010, le générateur de données Pro b# calcule une empreinte de données (par exemple l'empreinte d'un fichier de données de maladie) et forme une transaction émise depuis son adresse de portefeuille, @walletPro b#, comportant l'empreinte en question, sa localisation sous forme de l'URL de la ressource par exemple, et, par exemple, comme paramètre d'accès, l'identifiant de la maladie. Cette transaction est transmise en 1011 à la chaine de blocs à d'adresse de la fonction d'enregistrement @SC #Print du premier contrat intelligent « #Print ».

Le premier contrat intelligent vérifie l'identité du générateur de données Pro b#, en cas de succès déverrouille une autorisation d'accès en écriture puis enregistre cette autorisation dans la chaine de blocs.

Le générateur de données transmet par ailleurs en 1011-2 une demande de consentement au propriétaire des données (patient). Le terminal du propriétaire répond en envoyant en 1011-3 une transaction à la chaine de blocs en appelant le premier contrat intelligent « #Print ». Celui-ci enregistre le consentement du patient dans la chaîne de blocs.

En outre, le générateur de données, Pro b#, transmet en 1012 les données (fichier de données maladie) ainsi que les empreintes correspondantes au serveur de données. Celui-ci vérifie l'existence de l'autorisation d'accès en écriture (du générateur de données) et du consentement (du patient) en consultant, en 1023, le premier contrat intelligent.

Si la vérification est concluante, le serveur enregistre les données aux adresses indexées par leurs empreintes correspondantes. Avantageusement, les données sont horodatées avant d'être stockées. Comme dans le mode de réalisation précédent, les données peuvent être stockées en clair ou bien chiffrées. Dans le second cas, le serveur de données les déchiffre à la volée avant de les transmettre sur le second canal sécurisé.

La phase de demande d'autorisation d'accès aux données, 1030, suppose que les première et seconde phases aient été préalablement exécutées.

L'utilisateur Pro a# (professionnel de santé souhaitant analyser les données) peut demander une autorisation d'accès à des données médicales (correspondant à une maladie donnée). Cette demande d'autorisation d'accès se voit attribuer par l'utilisateur un identifiant IDreq.

L'utilisateur Pro a# demande l'autorisation d'accès (en lecture) à l'aide d'une transaction émise depuis son adresse de portefeuille,@walletPro a#, et comportant comme arguments l'identifiant de la demande d'autorisation, IDreq, et l'identifiant de son jeton d'accès (*TokUID* ). Après avoir signé cette transaction au moyen de sa clé privée, l'utilisateur la transmet en 1031 au contrat intelligent « #Authorize » enregistré dans la chaine de blocs à l'adresse @SC #Authorize.

Le contrat intelligent « #Authorize » exécute un script de déverrouillage délivrant une autorisation d'accès si l'identité de l'utilisateur (@walletPro a# ) est légitime, s'il est bien le propriétaire du jeton identifié par *TokUID* et que le jeton d'accès est valide. Si la vérification est concluante, le script de déverrouillage fournit une autorisation d'accès à la ressource selon la règle d'accès.

A défaut, l'autorisation est refusée et rien n'est enregistré dans la chaine de blocs.

Comme dans le premier mode de réalisation, le contrat est exécuté par les nœuds vérificateurs (ou mineurs) du réseau qui en vérifient le bon comportement lors de son exécution. En cas de consensus entre les vérificateurs sur le résultat de l'exécution du contrat, l'autorisation est enregistrée dans la chaine de blocs.

Dans la phase d'accès aux données, 1040, l'utilisateur transmet en 141 au serveur de données, via le second canal sécurisé, une requête d'accès ayant pour argument l'identifiant de requête IDreq.

Le serveur de données consulte alors la chaine de blocs en émettant en 1042, depuis l'adresse de portefeuille du serveur de données, @walletDataServer, une transaction comportant l'identifiant de la demande d'autorisation, IDreq, et l'identifiant du jeton (TokUID). Le serveur de données vérifie que l'autorisation d'accès a bien été octroyée à l'utilisateur @walletPro a# pour la requête IDreq, que le consentement du propriétaire (patient) des données est bien enregistré, récupère l'adresse du contrat #Print dans le jeton et lit les empreintes associées à la source de données spécifiée dans le jeton d'accès.

Le serveur de données lit ensuite les données stockées dans la première base de données aux adresses indexées par les empreintes de données.

Le cas échéant, le serveur effectue un traitement sur les données ainsi lues. Par exemple, il peut combiner plusieurs données provenant de sources différentes. Il peut aussi n'être autorisé qu'à traiter ou divulguer qu'une partie des données lues (accédées), le traitement étant défini par l'usage figurant dans le jeton précédemment lu dans la chaine de blocs.

Le résultat du traitement est ensuite transmis en 1043 à l'utilisateur Pro a# via le second canal sécurisé.

## Revendications

1. Méthode de stockage anonymisé de données personnelles, lesdites données personnelles appartenant à un propriétaire de données et étant fournies par un dispositif générateur de données, lesdites données personnelles étant destinées à être stockées dans une première base de données hébergée par un serveur de données, le dispositif générateur de données étant connecté au serveur de données (140) au moyen d'un premier canal sécurisé, le dispositif générateur de données et le serveur de données, étant interfacés à une chaine de blocs (190), ladite méthode comprenant les étapes suivantes:
- le générateur de données génère des empreintes desdites données au moyen d'une fonction de hachage et enregistre (212) lesdites empreintes dans la chaine de blocs en appelant un premier contrat intelligent (#Print) déployé dans cette chaine, lesdites empreintes étant enregistrées dans la chaine de blocs en relation avec des paramètres d'accès ;
- le générateur de données transmet (213) lesdites empreintes et données associées au serveur de données via le premier canal sécurisé ;
- le serveur de données consulte (214) la chaine de blocs pour y lire des empreintes enregistrées, une donnée étant stockée dans la première base de données à une adresse indexée par son empreinte si cette empreinte est enregistrée dans la chaine de blocs, et n'étant pas stockée dans la première base de données si cette n'empreinte n'est pas enregistrée dans la chaine de blocs.

2. Méthode de stockage anonymisé de données personnelles selon la revendication 1, dans laquelle les données sont stockées en clair dans la première base de données.

3. Méthode de stockage anonymisé de données personnelles selon la revendication 1 ou 2, dans laquelle le dispositif générateur de données est un dispositif de frontière (430) d'un réseau (435) de capteurs (433), le dispositif de frontière (430) collectant des données brutes issues de ces capteurs via une passerelle (431).

4. Méthode de stockage anonymisé de données personnelles selon la revendication 3, dans laquelle lesdites données sont collectées sous forme de trames, chaque trame associée à un capteur comportant une entête contenant l'identifiant du capteur et une charge utile contenant des données brutes du capteur, l'empreinte des données brutes étant stockée dans la chaine de blocs en relation avec ledit identifiant du capteur.

5. Méthode de gestion d'accès à des données personnelles comprenant un stockage anonymisé de ces données selon l'une des revendications précédentes, la méthode comprenant en outre les étapes:
a) un serveur de jetons d'accès génère des jetons d'accès pour différents utilisateurs, un jeton d'accès d'un utilisateur représentant les droits d'accès de cet utilisateur aux données personnelles pour un usage prédéterminé, le jeton d'accès dudit utilisateur étant identifié par un identifiant de jeton et transmis (312), au moyen d'une deuxième transaction, à un deuxième contrat intelligent (#Subscribe) stocké dans la chaine de blocs, le deuxième contrat intelligent enregistrant le jeton d'accès dans la chaine de blocs;
b) un terminal dudit utilisateur (120) transmet, au moyen d'une troisième transaction une demande d'autorisation d'accès (321) identifiée par un identifiant de demande d'autorisation, à un troisième contrat intelligent (#Authorize) stocké dans la chaine de blocs, le troisième contrat intelligent interrogeant (322) le premier contrat intelligent et obtenant le jeton d'accès (353) en lui fournissant des éléments cryptographiques permettant d'authentifier l'utilisateur, puis déterminant si des conditions d'accès contenues dans le jeton sont bien remplies et, dans l'affirmative, enregistrant l'autorisation d'accès dans la chaine de blocs ;
c) le terminal dudit utilisateur transmet une requête d'accès au serveur de données (331), la requête d'accès comprenant ledit identifiant de demande d'autorisation d'accès, le serveur de données interrogeant (332) le troisième contrat intelligent en lui fournissant ledit identifiant de demande d'autorisation d'accès, le troisième contrat intelligent retournant (335) au serveurde données le jeton correspondant à cette demande si une autorisation d'accès correspondant à l'identifiant de la demande d'autorisation est bien enregistrée dans la chaine de blocs ;
d) le serveur de données lit (336,337) dans la chaine de blocs les empreintes correspondant aux paramètres d'accès spécifiés dans le jeton d'accès obtenu à l'étape (c), lit les données personnelles stockées dans la première base de données aux adresses indexées par les empreintes ainsi lues, et transmet (338) les données personnelles ainsi lues au terminal dudit utilisateur.

6. Méthode de gestion d'accès à des données personnelles selon la revendication 5, dans laquelle lesdits paramètres d'accès comprennent l'identifiant d'un capteur.

7. Méthode de gestion d'accès à des données personnelles selon la revendication 5 ou 6, dans laquelle les éléments cryptographiques comprennent une clé publique de l'utilisateur ainsi qu'une adresse de portefeuille obtenue par hachage de ladite clé publique.

8. Méthode de gestion d'accès à des données personnelles selon l'une des revendications 5 à 7, dans laquelle préalablement à l'étape b) l'identifiant de jeton est transmis (313) au terminal de l'utilisateur.

9. Méthode de gestion d'accès à des données personnelles selon l'une des revendications 5 à 8, dans laquelle à l'étape b) la demande d'autorisation d'accès est enregistrée dans la chaine de blocs.

10. Méthode de gestion d'accès à des données personnelles selon l'une des revendications 5 à 9, dans laquelle le jeton d'accès possède un premier champ contenant l'identifiant de jeton, un deuxième champ contenant un identifiant de l'utilisateur, un troisième champ optionnel contenant un identifiant du propriétaire des données personnelles, un quatrième champ optionnel contenant l'adresse du premier contrat, et un cinquième champ contenant les paramètres d'accès.

## Patentansprüche

1. Verfahren zur anonymisierten Speicherung von persönlichen Daten, wobei die persönlichen Daten einem Dateneigentümer gehören und von einer Datengeneratorvorrichtung geliefert werden, wobei die persönlichen Daten dazu ausgelegt sind, in einer ersten Datenbank gespeichert zu werden, die von einem Datenserver gehostet wird, wobei die Datengeneratorvorrichtung mit dem Datenserver (140) mittels eines ersten gesicherten Kanals verbunden ist, wobei die Datengeneratorvorrichtung und der Datenserver über eine Schnittstelle mit einer Blockchain (190) verbunden sind, wobei das Verfahren die folgenden Schritte umfasst:
- der Datengenerator generiert Abdrücke der Daten mit Hilfe einer Hashfunktion und zeichnet die Abdrücke in der Blockchain auf (212) unter Aufrufen eines ersten intelligenten Kontrakts (#Print), der in dieser Kette ausgebreitet ist, wobei die Abdrücke in der Blockchain in Relation mit Zugriffsparametern aufgezeichnet werden;
- der Datengenerator überträgt (213) die Abdrücke und zugeordneten Daten über den ersten gesicherten Kanal an den Datenserver;
- der Datenserver konsultiert (214) die Blockchain, um dort aufgezeichnete Abdrücke zu lesen, wobei ein Datenelement in der ersten Datenbank an einer Adresse gespeichert wird, die durch seinen Abdruck indexiert ist, wenn dieser Abdruck in der Blockchain aufgezeichnet ist, und nicht in der ersten Datenbank gespeichert wird, wenn dieser Abdruck nicht in der Blockchain aufgezeichnet ist.

2. Verfahren zur anonymisierten Speicherung von persönlichen Daten nach Anspruch 1, bei dem die Daten klar in der ersten Datenbank gespeichert werden.

3. Verfahren zur anonymisierten Speicherung von persönlichen Daten nach Anspruch 1 oder 2, bei dem die Datengeneratorvorrichtung eine Peripherievorrichtung (430) eines Netzes (435) von Sensoren (433) ist, wobei die Peripherievorrichtung (430) Rohdaten sammelt, die von diesen Sensoren über ein Gateway (431) ausgegeben werden.

4. Verfahren zur anonymisierten Speicherung von persönlichen Daten nach Anspruch 3, bei dem die Daten in Form von Frames gespeichert werden, wobei jedes Frame, das einem Sensor zugeordnet ist, einen Kopf umfasst, der den Identifikator des Sensors enthält, und eine Nutzlast, die Rohdaten des Sensors enthält, wobei der Abdruck der Rohdaten in der Blockchain in Relation zu dem Identifikator des Sensors gespeichert wird.

5. Verfahren zur Verwaltung des Zugriffs auf persönliche Daten, umfassend eine anonymisierte Speicherung dieser Daten nach einem der vorhergehenden Ansprüche, wobei das Verfahren ferner die folgenden Schritte umfasst:
a) ein Server von Zugriffstokens generiert Zugriffstokens für verschiedene Benutzer, wobei ein Zugriffstoken eines Benutzers die Zugriffsrechte dieses Benutzers auf persönliche Daten für eine vorbestimmte Verwendung repräsentiert, wobei das Zugriffstoken des Benutzers durch einen Tokenidentifikator identifiziert wird und mittels einer zweiten Transaktion an einen zweiten intelligenten Kontrakt (#Subscribe) übertragen wird (312), der in der Blockchain gespeichert ist, wobei der zweite intelligente Kontrakt das Zugriffstoken in der Blockchain aufzeichnet;
b) ein Endgerät des Benutzers (120) überträgt mittels einer dritten Transaktion eine Zugriffsberechtigungsanfrage (321), die durch einen Berechtigungsanfrageidentifikator identifiziert wird, an einen dritten intelligenten Kontrakt (#Authorize), der in der Blockchain gespeichert ist, wobei der dritte intelligente Kontrakt den ersten intelligenten Kontrakt abfragt (322) und das Zugriffstoken (353) erhält, wobei er ihm kryptographische Elemente liefert, die die Authentifizierung des Benutzers ermöglicht, und dann bestimmt, ob Zugriffsbedingungen, die in dem Token enthalten sind, wohl erfüllt sind, und im Fall einer Bestätigung die Zugriffsberechtigung in der Blockchain aufzeichnet;
c) das Endgerät des Benutzers überträgt eine Zugriffsanforderung an den Datenserver (331), wobei die Zugriffsanforderung den Identifikator der Zugriffsberechtigungsanfrage umfasst, wobei der Datenserver den dritten intelligenten Kontrakt abfragt (332), wobei er ihm den Identifikator der Zugriffsberechtigungsanfrage liefert, wobei der dritte intelligente Kontrakt an den Datenserver das Token zurück gibt (335), das dieser Anfrage entspricht, wenn eine Zugriffsberechtigung, die dem Identifikator der Berechtigungsanfrage entspricht, wohl in der Blockchain aufgezeichnet ist;
d) der Datenserver liest (336, 337) in der Blockchain die Abdrücke entsprechend den Zugriffsparametern, die in dem Zugriffstoken spezifiziert sind, das im Schritt (c) erhalten wird, liest die persönlichen Daten, die in der ersten Datenbank an den Adressen gespeichert sind, die durch die somit gelesenen Abdrücke indexiert sind, und überträgt (338) die somit gelesenen persönlichen Daten an das Endgerät des Benutzers.

6. Verfahren zur Verwaltung des Zugriffs auf persönliche Daten nach Anspruch 5, bei dem die Zugriffsparameter den Identifikator eines Sensors enthalten.

7. Verfahren zur Verwaltung des Zugriffs auf persönliche Daten nach Anspruch 5 oder 6, bei dem die kryptographischen Elemente einen öffentlichen Schlüssel des Benutzers sowie eine Portfolioadresse enthalten, die durch Hashverarbeitung des öffentlichen Schlüssels erhalten ist.

8. Verfahren zur Verwaltung des Zugriffs auf persönliche Daten nach einem der Ansprüche 5 bis 7, bei dem vor dem Schritt b) der Tokenidentifikator an das Endgerät des Benutzers übertragen wird (313).

9. Verfahren zur Verwaltung des Zugriffs auf persönliche Daten nach einem der Ansprüche 5 bis 8, bei dem im Schritt b) die Zugriffsberechtigungsanfrage in der Blockchain aufgezeichnet wird.

10. Verfahren zur Verwaltung des Zugriffs auf persönliche Daten nach einem der Ansprüche 5 bis 9, bei dem das Zugriffstoken ein erstes Feld besitzt, das den Tokenidentifikator enthält, ein zweites Feld, das einen Benutzeridentifikator enthält, ein optionales drittes Feld, das einen Identifikator des Eigentümers der persönlichen Daten enthält, ein optionales viertes Feld, das die Adresse des ersten Kontrakts enthält, und ein fünftes Feld, das die Zugriffsparameter enthält.

## Claims

1. Method for anonymized storage of personal data, said personal data belonging to an owner of data and being supplied by a data generating device, said personal data being intended to be stored in a first database hosted by a data server, the data generating device being connected to the data server (140) by means of a first secure channel, the data generating device and the data server being interfaced with a blockchain (190), said method further comprising the following steps:
- the data generator generates fingerprints of said data by means of a hash function and records (212) said fingerprints in the blockchain by calling a first smart contract (#Print) deployed in this chain, said fingerprints being recorded in the blockchain in relation with access parameters;
- the data generator transmits (213) said fingerprints and associated data to the data server via the first secure channel;
- the data server consults (214) the blockchain to read therein the recorded fingerprints, a datum being stored in the first database at an address indexed by its fingerprint if this fingerprint is recorded in the blockchain, and not being stored in the first database if this fingerprint is not recorded in the blockchain.

2. Method for anonymized storage of personal data according to claim 1, in which the data are stored unencrypted in the first database.

3. Method for anonymized storage of personal data according to claim 1 or 2, wherein the data generating device is an edge device (430) of a network (435) of sensors (433), the edge device (430) collecting raw data coming from these sensors via a gateway (431).

4. Method for anonymized storage of personal data according to claim 3, wherein said data are collected in the form of frames, each frame associated with a sensor comprising a header containing the identifier of the sensor and a payload containing the raw data of the sensor, the fingerprint of the raw data being stored in the blockchain in relation with said identifier of the sensor.

5. Method for managing access to personal data including an anonymized storage of these data according to one of the preceding claims, said method further comprising the following steps:
(a) an access token server generates access tokens for different users, an access token of a user representing the access rights of this user to the personal data for a predetermined use, the access token of said user being identified by a token identifier and transmitted (312), by means of a second transaction, to a second smart contract (#Subscribe) stored in the blockchain, the second smart contract recording the access token in the blockchain;
(b) a terminal of said user (120) transmits, by means of a third transaction, an access authorization request (321) identified by an authorization request identifier, to a third smart contract (#Authorize) stored in the blockchain, the third smart contract interrogating (322) the first smart contract and obtaining the access token (353) by supplying to it cryptographic elements making it possible to authenticate the user, then determining if the access conditions contained in the token are indeed met and, in the affirmative, recording the access authorization in the blockchain;
(c) the terminal of said user transmits an access request to the data server (331), the access request including said access authorization request identifier, the data server interrogating (332) the third smart contract by supplying to it said access authorization request identifier, the third smart contract returning (335) to the data server the token corresponding to this request if an access authorization corresponding to the authorization request identifier is indeed recorded in the blockchain;
(d) the data server reads (336,337) in the blockchain the fingerprints corresponding to the access parameters specified in the access token obtained at step (c), reads the personal data stored in the first database at the addresses indexed by the fingerprints thereby read, and transmits (338) the personal data thereby read to the terminal of said user.

6. Method for managing access to personal data according to claim 5, wherein said access parameters include the identifier of a sensor.

7. Method for managing access to personal data according to claim 5 or 6, wherein the cryptographic elements include a public key of the user and a wallet address obtained by hashing of said public key.

8. Method for managing access to personal data according to one of claims 5 to 7, wherein, prior to step (b), the token identifier is transmitted (313) to the terminal of the user.

9. Method for managing access to personal data according to one of claims 5 to 8, wherein at step (b) the access authorization request is recorded in the blockchain.

10. Method for managing access to personal data according to one of claims 5 to 9, wherein the access token has a first field containing the token identifier, a second field containing an identifier of the user, a third optional field containing an identifier of the owner of the personal data, a fourth optional field containing the address of the first contract, and a fifth field containing the access parameters.
